# EUROPEAN PATENT APPLICATION

(11) **EP 4 835 614 A1**
(43) Date of publication of application: **04.11.2026**
(21) Application number: 26173773.8
(22) Date of filing: 21.04.2026
(51) Int. Cl.: G06F 1/329, G06F 1/324, G06F 1/3206, G06F 1/3296, G06F 9/50, G06F 9/455

(54) **PER-VIRTUAL MACHINE POWER MANAGEMENT USING VIRTUAL MACHINE PRIORITIES**

(30) Priority: 30.04.2025 US 202519195675
(71) Applicant: Microsoft Technology Licensing, LLC, Redmond, WA 98052 (US)
(72) Inventor: DEVAL, Anant Shankar, Redmond, 98052 (US); PHILLIPS, Timothy F., Redmond, 98052 (US); MAPES, Teague C., Redmond, 98052 (US); MISRA, Pulkit Ambikanandan, Redmond, 98052 (US); BIANCHINI, Ricardo Gouvea, Redmond, 98052 (US)
(74) Representative: CMS Cameron McKenna Nabarro Olswang LLP

(57) **Abstract**

Improved power management in a multi-core processor includes allocating power among the cores based on priories associated with the virtual machines (VM) currently executing on cores. Power control responsiveness may be increased by controlling power allocation in firmware for the multi-core processor by communicating VM priories from a hypervisor to the firmware. A power consumption feedback control loop may be implemented in the firmware. Increased power control responsiveness allows for increased oversubscription to a power supply used by diverse compute workloads.

## Description

### BACKGROUND

Computing devices are generally supplied by an electrical power supply capable of exceeding peak power requirements of the devices. However, in modern facilities for cloud computing servers, the availability and cost of electrical power is increasingly a constraint. As a result, computing servers may be configured to "oversubscribe" to a power supply whereby a sum of potential peak power requirements for all devices supplied by a power supply is allowed to exceed the maximum the local power supply can provide. Since computer devices do not use their potential peak power all the time, actual power used in such a facility is generally well below the sum of potential peak power requirements. For example, a cloud sever farm generally includes many servers, each with many processor cores, that simultaneously execute diverse compute loads from many customers assigned to different cores within each server. In general, such diverse compute loads require variable compute performance and hence the processor cores assigned to diverse compute loads will each consume a variable amount of power. As a result, the total power actually used across diverse compute workloads can be much lower than the sum of the nominal peak potential power requirements. Such power supply oversubscription allows a server facility to more efficiently use of a constrained facility power supply, for example by allowing more servers or faster servers to operate from fixed power supply.

Increasing power oversubscription can increase computing capacity from a fixed power supply at the cost of increased risk of power demand exceeding peak supply. This risk may be addressed by throttling power consumption of servers in response to a power alarm. A power alarm may indicate that a measure of current power consumption has passed a threshold near or approaching the maximum possible supply. A server's power consumption may be throttled, for example, by reducing a voltage supplied to the server's processor cores and/or by reducing a clock speed supplied to the server's processor cores.

### SUMMARY

Improvements to techniques for throttling server power include speeding a responsiveness of a power throttling control, for example by implementing a throttling control in control processor separate from the computing core processors of a processor device and also basing throttling control on local measurements of power consumption within the processor device. An improved system for throttling power consumption of a compute server may include determining, in a firmware of a processor device, a power allocation among processor cores of the processor device based on a power budget for the processor device and priorities of virtual machines (VMs) assigned to the processing cores, and then controlling the processing cores to consume power according to the power allocation.

Improved techniques for controlling power consumption of a processing device include identifying a power budget for the processor device, receiving, by firmware running on a control processor of the processing device and from software such as a hypervisor running on one or more of the plurality of processor cores, a priority for each of a plurality of VMs running on the processor cores and an assignment for each of the plurality of VMs to one or more processor cores of the plurality of processor cores. A power allocation among the plurality of processor cores may be determined based on the VM priorities and the VM assignments, wherein the power allocation provides more power consumption for cores with an assigned VM having higher priority and less power consumption for cores with an assigned VM having lower priority. Power may be allocated according to an allocation scheme that attempts to, for example, maximize performance of VMs based on priority within a constrained power budget. Resource control data may be determined for a first processor core of the plurality of processor cores based on the power allocation, a power consumption of the first processor core may be controlled based the resource control data.

In some embodiments of the improved techniques, a power consumption budget for a processor device may be determined based on a power consumption budget for a server containing the processor device, and/or a power alarm indicating power consumption of the server, a group of servers, or an entire server facility has exceeded a threshold. Some embodiments of this disclosure, determining the power allocation among processor cores may include determining a power budget for a particular processor core based on the power budget for the whole processor device and the priorities of the assigned VMs.

Improved dynamic control of power throttling may allow further oversubscription to a power supply in server facility and, hence, may provide improved resource use of a constrained power supply. Improved dynamic control of power throttling may include estimating power consumption based on local measurements of current and/or voltage within a processor device. A difference between the estimated power consumption and a power budget may be analyzed by a feedback loop controller such as a proportional-integral-derivative (PID) controller to produce a desired adjustment of power consumption. Then the power allocation among the plurality of processor cores may be based on the desired adjustment to power consumption. In an aspect, a resource budget (such as a total compute performance budget or a clock speed budget) may be determined based on the desired adjustment to power consumption, and then resources may be allocated amongst the cores based on the resource budget. In some aspects, resource allocation may be done differently depending on whether the resource budget is above or below a nominal amount of the resource. When the budget is above nominal, allocation may be based on a boost allocation scheme. Alternately, when the budget is below nominal, allocation may be based on a throttle allocation scheme.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 depicts an example compute server.
FIG. 2 depicts an example dynamic power consumption controller.
FIG. 3 depicts an example method for controlling power consumption of a multi-core processor device.
FIG. 4 depicts a block diagram of a computing-based device that may be included in any of the above systems and may be used to implement any of the above methods.

### DETAILED DESCRIPTION

Server power consumption may be throttled by reducing a voltage supplied to the server's processor device and/or by reducing a clock speed supplied to the server's processor device. This may have the result of reducing computing performance equally for all compute loads running simultaneously on any cores in the power-throttled computing device. However, the cost for reducing computing performance differs between compute loads. For example, when a human is waiting for the result of a computing task, the cost for slowing compute performance may be considered higher than slowing an offline computing task. Hence, improved techniques for throttling server power consumption may take into account a throttling priority of the diverse computing workloads, for example by applying more power throttling to lower priority workloads and applying less power throttling to higher-priority workloads.

Additional improvements to workload-prioritized server power throttling include speeding responsiveness of the throttling control, for example by implementing a throttling control in control processor separate from the core processors of a processor device. Other improvements to workload-prioritized server power throttling include a throttling control based on measurements of power or other resource consumption, such as voltage or current measurements within the processor device or elsewhere within the server containing the processor device. An improved system for throttling power consumption of a compute server may include determining, in a firmware of a processor device, a power allocation among processor cores of the processor device based on a power budget for the processor device and priorities of virtual machines (VMs) assigned to the processing cores, and then controlling the processing cores to consume power according to the power allocation. In an aspect, power may be allocated according to an allocation scheme that attempts to, for example, maximize performance of VMs based on VM priorities within a constrained power budget, or to provide a nominal performance for all VMs before boosting performance of highest priority VMs.

Embodiments may dynamically control power consumption by iteratively adjusting consumption. Dynamic control can adapt consumption in response to changes in operating conditions such as changes to assignment of VM and priorities, changing resource consumption of a particular VM, power alarms, and changes to a power budget. By controlling power consumption in hardware or firmware of a multi-core processor, iterative dynamic control can be faster than prior systems, including more frequent adjustments to changing operating conditions. More frequent estimation and control of consumption may allow a computing facility to further oversubscribe a power supply safely, yielding increased computational capacity from a fixed power supply.

Improved techniques for dynamically controlling power consumption of a processing device include identifying a power budget for the processor device, receiving, by firmware running on a control processor of the processing device and from software such as a hypervisor running on one or more of the plurality of processor cores, a priority for each of a plurality of VMs running on the processor cores and an assignment for each of the plurality of VMs to one or more processor cores of the plurality of processor cores. A power allocation among the plurality of processor cores may be determined based on the VM priorities and the VM assignments, wherein the power allocation provides more power consumption for cores with an assigned VM having higher priority and less power consumption for cores with an assigned VM having lower priority. Resource control data may be determined for a first processor core of the plurality of processor cores based on the power allocation, a power consumption of the first processor core may be controlled based the resource control data.

Some embodiments may employ a power alarm, such as when a power supply is oversubscribed. A power alarm may indicate current power consumption has exceeded a threshold approaching a maximum possible supply, for example for the processor device or another portion of a server containing the processor device, the whole server, a group of servers withing a physical facility, or an entire computing facility. In response to a power alarm, a power budget may be reduced.

Embodiments may have multiple power budget for different scopes of computing components. For example, improved techniques may include determining a power consumption budget for a processor device as a subset of a power consumption budget for the whole server containing the processor device, leaving some of the budget for the server for other components outside the processor, such as storage or networking components. In another example, determining a power allocation among processor cores may include determining a power budget for a particular processor core based on the power budget for the whole multi-core processor device (and based on the priorities of the assigned VMs).

Adjustments to compute performance of individual processor cores may effect power consumption of the processor core. Hence, in some embodiments of this disclosure, determining the power allocation among processor cores may include determining a performance target for a particular processor core based on the power budget for the whole processor device and the priorities of the assigned VMs. For example, a core with a higher-priority VM may be allocated a higher compute performance while a core with a lower-priority VM may be allocated a lower compute performance.

Improved dynamic control of power throttling may allow further oversubscription to a power supply in server facility and, hence, may provide improved resource use of a power supply constraint. Improved dynamic control of power throttling may include estimating power consumption based on local measurements of current and/or voltage within a processor device. A difference between the estimated power consumption and a power budget may be analyzed by a feedback loop controller, such as a proportional-integral-derivative (PID) controller, to produce a desired adjustment of power consumption. Then the power allocation among the plurality of processor cores may be based on the desired adjustment to power consumption. In an aspect, a resource budget (such as a total compute performance budget or a clock speed budget) may be determined based on the desired adjustment to power consumption, and then resources may be allocated amongst the cores based on the resource budget. In some aspects, resource allocation may be done differently depending on whether the resource budget is above or below a nominal amount of the resource. When the budget is above nominal, allocation may be based on a boost allocation scheme. Alternately, when the budget is below nominal, allocation may be based on a throttle allocation scheme. In some implementations, the nominal amount of the resource may be the amount of the resource required for all cores to operate at the minimum performance target. For example, a boost allocation scheme may first attempt to provide a minimum performance target for all cores before allocating remaining surplus resources according to the priorities of assigned VMs. Alternately, a throttle allocation scheme may first assign resources to all cores according to a minimum performance target, and then reduce resources below the target for some cores based on the priorities of assigned VMs until the total resource budget is not exceeded. In some embodiments, the boost and throttle schemes may use different VM priorities.

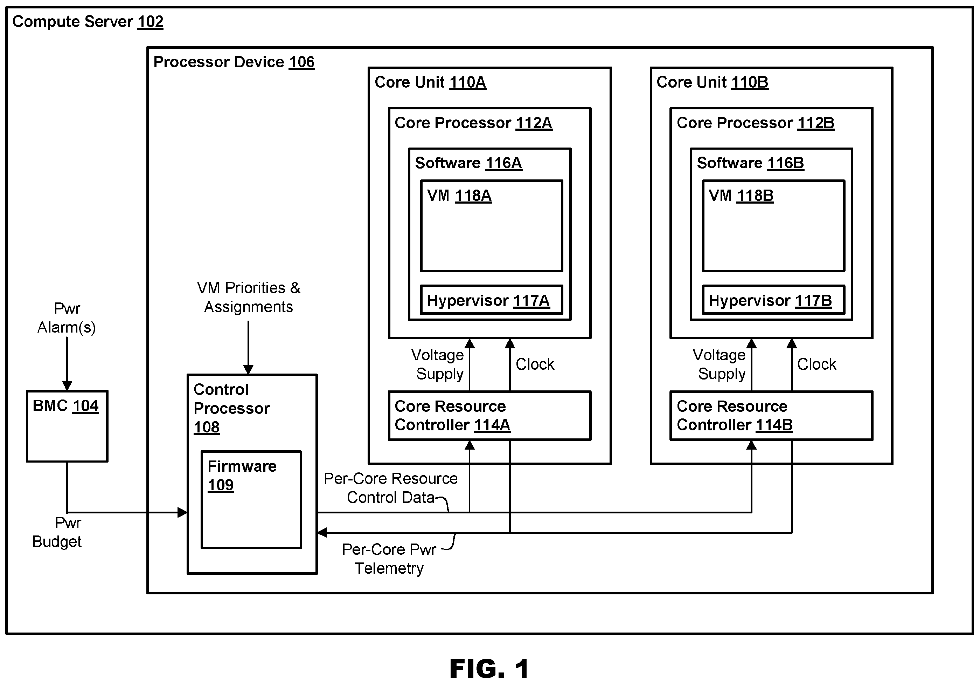

FIG. 1 depicts an example compute server 102. Sever 102 may be, for example, one server of many in a cloud computing facility serviced by a single external electrical power supply with a maximum supply capacity. Server 102 includes a baseband management controller (BMC) 104 and a processor device 106. Processor device 106 includes cores 110A, 110B and a control processor 108 for controlling the processor device 106. Each core unit 110A, 110B includes a respective core processor 112A, 112B and a respective core resource controller 114A, 114B for controlling power consumption caused by software 116A, 116B running on the respective core processor. The core processors may be executing software 116A, 116B including a respective hypervisor 117A, 117B and a virtual machine (VM) 118A, 118B. The virtual machines may include, for example, software for performing a variety cloud computing workloads from different clients of a cloud computing service.

As depicted in FIG. 1, processor device 106 includes just two cores, but embodiments are not so limited. Typical multi-core processor device may include hundreds or thousands of cores, each with an assigned VM simultaneously executing on in software running on the core processor.

In operation, BMC 104 may determine an electrical power budget for processor device 106 and provide the budget to control processor 108 of processor device 106. The processor device processor budget may be determined, for example, as a subset of a power budget for the whole server 102. In aspects, a power budget may also be based on a power alarm indicating consumption has exceeded a threshold amount of power. The threshold may be set at or just below the maximum capacity of a power supply, such as a supply internal or external to server 102.

Control processor 108 may receive an indication of which VMs are assigned to which core units along with relative priorities for the different VMs. For example, a hypervisor, such as 117A or 117B, running on a core processor of device 106 may determine which VM to run on which core processor. Processor device 106 may include a communication channel between control processor 108 and software 116A/116B such as a hypervisor 117A/117B running on cores of the processor device 106 which may be used by a hypervisor to send an indication of VM priorities and core assignments to control processor 108 when the priorities or assignments change. A communication channel between control processor 108 and software 116A/116B running on a core processor may be facilitated by standardized communication channels such as is described in Advanced Configuration and Power Interface (ACPI) specifications. Control processor 108 may use the priorities of assigned VMs and the power budget to manage power consumption of processor device 106, which may include determining an allocation of resources across the core processors of processor device 106. Resource control data may be determined for one or more cores based on the power budget according to the resource allocation, and the resource control data may be communicated to one or more core resource controllers, such as controllers 114A and 114B, which may then control power consumption of the controller's corresponding core processor, such as core processor 112A and 112B. In an aspect, an allocation of resources may include adjusting prior per-core power consumption controls (or, in an initial iteration, adjusting default power consumption controls) such as a clock speed or a voltage supplied to each core based on the priorities of the assigned VMs. In another aspect, an allocation of resources may include selecting a core power budget for each core processor of processor device 106. Core resource controllers 114A, 114B may include circuitry for adjusting a voltage or clock speed supplied to the corresponding core processor.

An increase in voltage and/or clock speed supplied to a core processor may increase power consumed by software running on the core processor while also increasing computing performance. Alternately, a decrease in voltage or clock speed supplied to a core processor may decrease power consumed by software running on the core processor while also decreasing computing performance. When a power constraint precludes all core processors from running at full speed, a power allocation that reduces power consumption of lower priority VMs more than higher priority VMs allows the compute loads that are time-critical or sensitive to performance adjustments to be impacted less than other compute loads.

In some embodiments, power allocation among core processors may be based on estimates of power consumption in addition to the priorities of assigned VMs. Power consumption may be based on measurements of current and/or voltage at one or more locations within processor device 106. For example, each core power controller may provide power telemetry for the corresponding core unit to control processor 108. Per-core power telemetry may be based on measurements of a current and/or voltage with the corresponding core unit 110A, 110B, and the per-core power telemetry may be associated with the VMs currently assigned to the corresponding core. In another example, control processor 108 may base an estimate of current power consumption on measurements of current or voltage supplied to groups of core units within processor device 106.

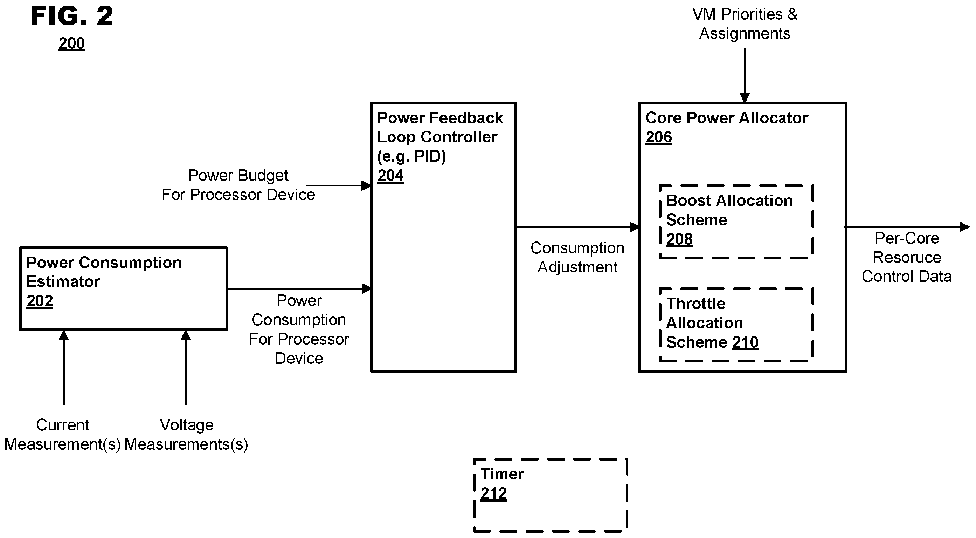

Embodiments of iterative dynamic power control may include a power consumption feedback control loop, where a power budget for the processor device is iteratively compared to an estimate of current power consumption to determine a desired adjustment to power consumption at every iteration of the feedback loop. An example feedback loop for power control is depicted in FIG. 2.

FIG. 2 depicts an example dynamic power consumption controller 200. Power consumption controller 200 may be implemented, for example, by firmware 109 running on control processor 108 for controlling power consumption of processor device 106 (FIG. 1). Power consumption controller 200 includes power consumption estimator 202, power feedback loop controller 204, and core power allocator 206.

In operation, power consumption estimator 202 may estimate the amount of power currently being consumed by processor device 106 (FIG. 1) based on one or more measurements of electrical current and/or voltage. For example, each core may provide power telemetry to control processor 108, and firmware 109 may then estimate the total power currently being consumed by processor device 106. Power feedback loop controller 204 may compare the estimated total power consumption for the processor device to a power budget for the processor device and determine a desired adjustment to power consumption for the whole processor device. Core power allocator 206 may determine an allocation of resources such as voltage and clock speed for each core based on priorities of assigned VMs and the desired consumption adjustment. Core power allocator 206 may further generate per-core power resource control data based on the allocation, when may be sent to core power controllers for controlling adjustment to power consumption of the corresponding core processor. This forms a feedback loop when the adjusted power consumption is later estimated by power consumption estimator 202. In an aspect, timer 212 may be used to control a frequency of iterations around the power feedback loop of power consumption controller 200. For example, timer 212 may control timing of current and voltage measurements used by power consumption estimator 202.

Various different types of processor resources may affect power consumption. For example, in addition to a voltage and clock speed supplied to a core processor, power consumption may be controlled by controlling resources such as a bandwidth or access speed for busses, caches, or other types of memory. In some embodiments, core power allocator 206 may allocate one or more of various types of processor resources among the cores in response to a desired power consumption adjustment, and per-core resource control data may specify control data for any such resources. Then power consumption by individual core processors may be controlled based on the per-core resource control data.

In an aspect, power feedback loop controller may be implemented as a proportional-integral-derivative (PID) controller. For example, the power budget for the processor device may be input to a PID as the set point or desired process variable, and the estimate of current power consumption may be input to a PID controller as the measured or current process variable. The PID may analyze the difference over time between the set point and the measured process variable by summing a proportional (P), integral (I), and derivative (D) control terms to produce the desired power consumption adjustment. In an aspect, timer 212 may determine a frequency for calculating the consumption adjustment.

In another aspect, core power allocator 206 may include multiple different resource allocation schemes. For example, a resource budget (such as a total compute performance budget or a clock speed budget) may be determined based on the desired consumption adjustment from power feedback loop controller 204, and then resources may then be allocated amongst the cores based on the resource budget. In some aspects, resource allocation may be done differently depending on whether the resource budget is above or below a nominal amount of the budgeted resource. When the budget is above nominal, allocation may be based on a boost allocation scheme 208. Alternately, when the budget is below nominal, allocation may be based on a throttle allocation scheme 210. Boost allocation scheme 208 and Throttle allocation scheme 210 may differ. In a first example, the boost scheme may adjust consumption more slowly than the throttle scheme, which may help prevent exceeding an inflexible power supply maximum when boosting consumption, while still responding quickly to any desired throttling of consumption. In a second example, the throttle scheme 210 may adjust power control data for all cores based on the priority of assigned VMs, while the boost scheme 208 may first attempt to accommodate VMs associated with a minimum performance guarantee (e.g. VMs with a highest priority) before adjusting power control data of other lower-priority VMs. In a third example, each VM may have two associated priorities: a boost priority used by the boost allocation scheme 208, and a throttling priority used by the throttle allocation scheme 210.

In a fourth example of differing allocation schemes, core power allocator 206 may allocate compute performance among processor cores which may indirectly allocate power consumption. For example, a desired power consumption adjustment may be mapped to a change in total available compute performance resources, and then core power allocator 206 may allocate the total available compute performance among processor cores. An boost allocation scheme may start by allocating every core a nominal performance target, and then increase performance allocated to only the cores assigned to highest-priority VMs until all remaining compute performance is allocated. If compute performance remains to be allocated after all cores with highest-priority VMs are adjusted to a maximum performance, then core with second-highest priority VMs may also have their performance allocation increased above the nominal performance target.

In other embodiments (not depicted), a system similar to dynamic power consumption controller 200 may control resources other than power. For example, given a target budget and consumption measurements of a resource other than electrical power, a resource feedback loop controller (similar to power feedback loop controller 204) may provide consumption adjustments to a core resource allocator (similar to core power allocator 206), which in turn may produce per-core resource control data that can be used to control consumption of the resource at individual processor cores.

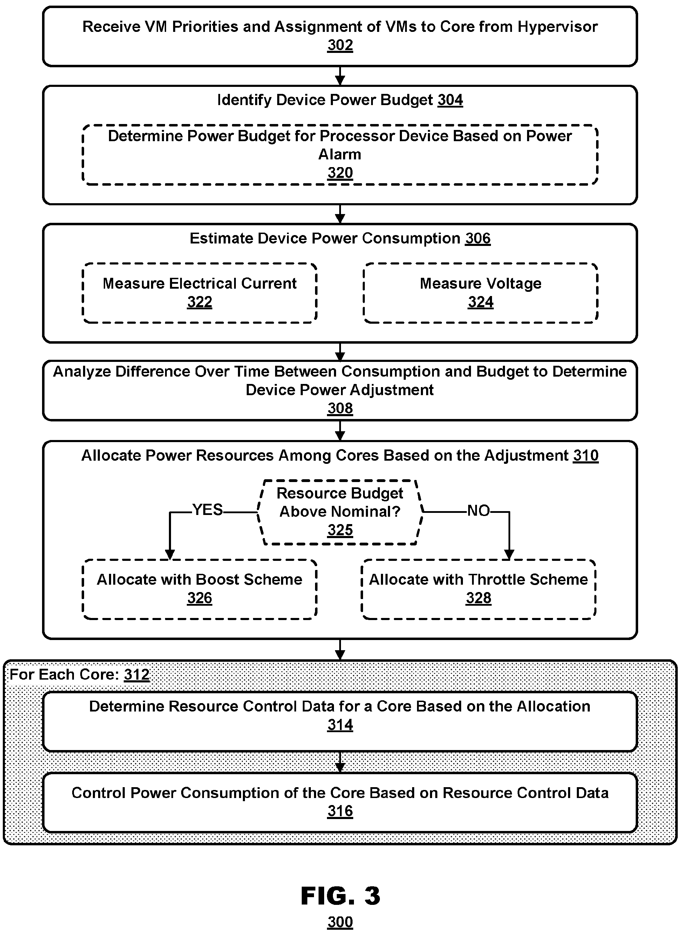

FIG. 3 depicts an example method 300 for controlling power consumption of a multi-core processor device. Method 300 may be implemented, for example, by firmware 109 running on control processor 108 for controlling power consumption of processor device 106 (FIG. 1). Method 300 includes receiving VM priorities and assignments of VMs to core processors from a hypervisor (box 302) or other software running on a processor core of the processor device, identifying a power budget for the processor device (box 304), and estimating a current power consumption of the processor device (box 306). The difference between the power budget and current consumption may be analyzed over time to determine a desired adjustment to power consumption of the processor device (box 308). Power resources may be allocated among processor cores based on the desired adjustment to power consumption (box 310). Then for each core processor in a multi-core processor device (box 312), resource control data is determined based on the allocation (box 314), and power consumption for the core is controlled based on the resource control data (box 316).

In aspects, method 300 or portions thereof may be performed iteratively, for example based on timer 212 (FIG. 2). The adjustment to power consumption may be determined (box 308) iteratively based on a feedback loop controller such as controller 204 (FIG. 2) or PID controller.

In some optional aspects of method 300, the power budget for the multi-core processor device may be based on a power alarm indicating power consumption (internal and/or external to the processor device) has exceeded a threshold (box 320). A power consumption estimate may be based on one or more measurements of electrical current (box 322) and/or one or more measurements of voltage (box 324). Allocation of resources among the cores may be based on multiple different resource allocation schemes. For example, if a resource budget is above a nominal target (box 325), resources may be allocated according to a boost scheme (box 326). Alternately if the resource budget is below the nominal target (box 325) resource may be allocated according to a throttle scheme (box 328).

In various embodiments, the ordering of boxes 302, 304 and 306 may vary. For example, a power budget may be received before VM priorities. Moreover, when method 300 is performed iteratively, a frequency of receiving VM priorities (box 302), identifying a budget (box 304), and estimating consumption (box 306) may vary independently from each other. For example, VM priorities may only be received (box 302) when the priorities change, device power budget may only be identified (box 304) when a power alarm is received, and power consumption may be estimated (box 306) every time power is reallocated.

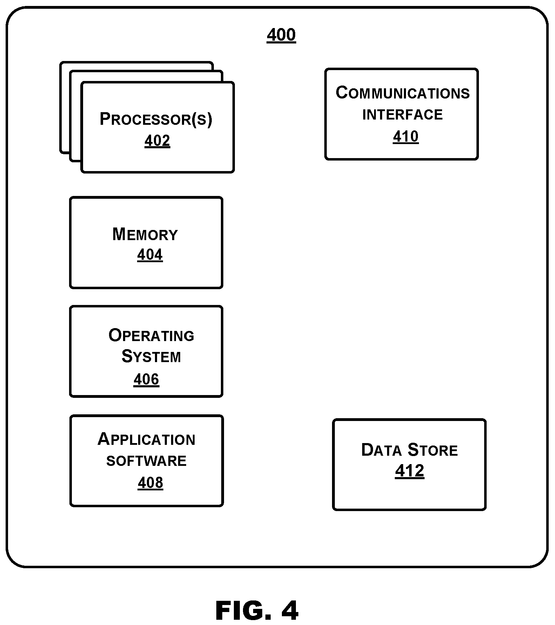

FIG. 4 depicts a block diagram of a computing-based device 400 that may be included in any of the above systems and may be used to implement any of the above methods. FIG. 4 illustrates various components of an example computing-based device 400 which are implemented as any form of a computing and/or electronic device. In some examples, computing-based device 400 is a general-purpose computer that is activated or reconfigured by a computer program stored in the computer. In other examples, computing-based device 400 is specially constructed for the intended purpose. In some examples, computing device 400 is a microprocessor used in embedded systems applications or other suitable applications. Processor(s) 402 may be employed as examples of (or an example component of) control processor 108, core processors 110A, 110B (FIG. 1) and may be used to implement some or all of method 300 (FIG. 3).

Computing-based device 400 comprises one or more processors 402 which are microprocessors, controllers, or any other suitable type of processors for processing computer executable instructions to control the operation of the device. The processor(s) 402 may include at least one general-purpose processing device such as a central processing unit, microprocessor, complex instruction set computing (CISC) microprocessor, reduced instruction set computing (RISC) microprocessor, or other general-purpose processing device. In some examples, for example where a system on a chip architecture is used, the processors 402 include one or more special-purpose processing device such as a fixed function block. The special-purpose processing device may be configured to execute instructions for performing the operations and methods described herein. Platform software comprising an operating system 406 or any other suitable platform software is provided at the computing-based device to enable application software 408 to be executed on the device. Data store 412 holds system prompts, context, bot code and other data.

The computer executable instructions are provided using any computer-readable media that is accessible by computing-based device 400. Computer-readable media includes, for example, computer storage media such as memory 404 and communications media. Computer storage media, such as memory 404, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device.

In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 404) is shown within the computing-based device 400 it will be appreciated that the storage is, in some examples, distributed or located remotely and accessed via a network or other communication link (e.g., using communication interface 410). The computing-based device is able to communicate with other bots and communications network nodes via communications interface 410.

The disclosure presented herein also encompasses the subject matter set forth in the following clauses:
Example Clause 1: A method for managing electrical power in a processor device (102) including a control processor (108) and a plurality of processor cores (112A/B), each processor core having a corresponding core power controller (114A/B), the method including:
   identifying a power budget for the processor device;
   receiving, by firmware (109) running on the control processor (108) from software (116A/B) running on one or more of the plurality of processor cores(110A/B), a priority for each of a plurality of virtual machines (VMs) (118A/B) running on the processor cores (116A/B) and an assignment for each of the plurality of VMs to one or more processor cores (112A/B) of the plurality of processor cores;
   determining a power allocation among the plurality of processor cores based the VM priorities and the VM assignments, wherein the power allocation provides more power consumption for processor cores with an assigned VM having higher priority and less power consumption for processor cores with an assigned VM having lower priority;
   determining resource control data for a first processor core of the plurality of processor cores based on the power allocation;
   controlling, by the firmware (109), a power consumption of the first processor core based the resource control data.
Example Clause 2: The method of clause 1, wherein the method further includes:
   determining a processor device power budget based on a server power budget and at least one power alarm;
   determining a core power budget for the first processor core based on the processor device power budget and the priorities of the assigned VMs;
   determining the resource control data based on the core power budget.
Example Clause 3: The method of clause 1, wherein the method further includes:
   in response to a power alarm being set, reducing core power budgets for a first set of processor cores assigned to VMs with a lower priority and not reducing core power budgets for a second set of processor cores assigned to VMs with a higher priority.
Example Clause 4: The method of clause 1, wherein the method further includes:
   estimating a power consumption based on a measurement of electrical current within the processor device;
   analyzing a difference between estimated power consumption and the power budget with an electrical power feedback loop controller in the control processor;
   adjusting the resource control data based on an output of the PID controller.
Example Clause 5: The method of clause 1, wherein the controlling of the power consumption of the first processor core including sending the resource control data to the core power controller corresponding to the first processor core.
Example Clause 6: The method of clause 1, wherein the resource control data indicates a voltage level to be supplied to the first processor core and a clock speed to be supplied to the first processor core.
Example Clause 7: The method of clause 1, wherein the method further includes:
   receiving boost priorities for the plurality of VMs and throttle priorities for the plurality of VMs, wherein the boost priorities and throttle priorities are different;
   in response to a determination that a budget for a resource is above a nominal amount of the resource, adjusting the resource control data based on the boost priorities; and
   in response to a determination that the budget for a resource is below the nominal amount of the resource, adjusting the resource control data based on the throttle priorities.
Example Clause 8: A processor device (102), comprising:
   a control processor (108); and
   a plurality of processor cores (112A/B), each processor core having a corresponding core power controller (114A/B);
   wherein the control processor (108) is configured to:
      identify a power budget for the processor device;
      receive, by firmware (109) running on the control processor from software running on one or more of the plurality of processor cores, a priority for each of a plurality of virtual machines (VMs) (118A/B) running on the processor cores (112A/B) and an assignment for each of the plurality of VMs to one or more processor cores of the plurality of processor cores;
      determine a power allocation among the plurality of processor cores based the VM priorities and the VM assignments, wherein the power allocation provides higher computing performance for processor cores with an assigned VM having higher priority and lower computing performance for processor cores with an assigned VM having lower priority;
      determine resource control data for a first processor core of the plurality of processor cores based on the power allocation;
      control, by the firmware (109), a power consumption of the first processor core based the resource control data.
Example Clause 9: The processor device of clause 8, wherein the control processor is further configured to:
   determine a processor device power budget based on a server power budget and at least one power alarm;
   determine a core power budget for the first processor core based on the processor device power budget and the priorities of the assigned VMs;
   determine the resource control data based on the core power budget.
Example Clause 10: The processor device of clause 8, wherein the control processor is further configured to:
   in response to a power alarm being set, reduce core power budgets for a first set of processor cores assigned to VMs with a lower priority and not reducing core power budgets for a second set of processor cores assigned to VMs with a higher priority.
Example Clause 11: The processor device of clause 8, wherein the control processor is further configured to:
   estimate a power consumption based on a measurement of electrical current within the processor device;
   analyze a difference between estimated power consumption and the power budget with an electrical power feedback loop controller in the control processor;
   adjust the resource control data based on an output of the PID controller.
Example Clause 12: The processor device of clause 8, wherein the controlling of the power consumption of the first processor core including sending the resource control data to the core power controller corresponding to the first processor core.
Example Clause 13: The processor device of clause 8, wherein the resource control data indicates a voltage level to be supplied to the first processor core and a clock speed to be supplied to the first processor core.
Example Clause 14: The processor device of clause 8, wherein the control processor is further configured to:
   receive boost priorities for the plurality of VMs and throttle priorities for the plurality of VMs, wherein the boost priorities and throttle priorities are different;
   in response to a determination that a budget for a resource is above a nominal amount of the resource, adjust the resource control data based on the boost priorities; and
   in response to a determination that the budget for a resource is below the nominal amount of the resource, adjust the resource control data based on the throttle priorities.
Example Clause 15: A non-transitory computer-readable storage medium storing instructions that, when executed on one or more control processors of a processor device comprising a plurality of processor cores, each processor core including a core power controller, cause the processor device to:
   identify a power budget for the processor device;
   receive, by firmware running on the control processor from software running on one or more of the plurality of processor cores, a priority for each of a plurality of virtual machines (VMs) running on the processor cores and an assignment for each of the plurality of VMs to one or more processor cores of the plurality of processor cores;
   determine a power allocation among the plurality of processor cores based the VM priorities and the VM assignments, wherein the power allocation provides more power consumption for processor cores with an assigned VM having higher priority and less power consumption for processor cores with an assigned VM having lower priority;
   determine resource control data for a first processor core of the plurality of processor cores based on the power allocation;
   control, by the firmware, a power consumption of the first processor core based the resource control data.
Example Clause 16: The storage medium of clause 16, wherein the instructions further cause the processor device to:
   determine a processor device power budget based on a server power budget and at least one power alarm;
   determine a core power budget for the first processor core based on the processor device power budget and the priorities of the assigned VMs;
   determine the resource control data based on the core power budget.
Example Clause 17: The storage medium of clause 16, wherein the instructions further cause the processor device to:
   in response to a power alarm being set, reduce core power budgets for a first set of processor cores assigned to VMs with a lower priority and not reducing core power budgets for a second set of processor cores assigned to VMs with a higher priority.
Example Clause 18: The storage medium of clause 16, wherein the instructions further cause the processor device to:
   estimate a power consumption based on a measurement of electrical current within the processor device;
   analyze a difference between estimated power consumption and the power budget with an electrical power feedback loop controller in the control processor;
   adjust the resource control data based on an output of the PID controller.
Example Clause 19: The storage medium of clause 16, wherein the controlling of the power consumption of the first processor core including sending the resource control data to the core power controller of the first processor core.

In the above detailed description, reference is made to the accompanied drawings, which form a part hereof, and which is shown by way of illustration, specific example configurations of which the concepts can be practiced. These configurations are described in sufficient detail to enable those skilled in the art to practice the techniques disclosed herein, and it is to be understood that other configurations can be utilized, and other changes may be made, without departing from the scope of the presented concepts. The above detailed description is, therefore, not to be taken in a limiting sense, and the scope of the presented concepts is defined only by the appended claims.

The above description provides specific details for a thorough understanding of, and enabling description for, various examples of the technology. One skilled in the art will understand that the technology may be practiced without many of these details. In some instances, well-known structures and functions have not been shown or described in detail to avoid unnecessarily obscuring the description of examples of the technology. It is intended that the terminology used in this disclosure be interpreted in its broadest reasonable manner, even though it is being used in conjunction with a detailed description of certain examples of the technology. Although certain terms may be emphasized below, any terminology intended to be interpreted in any restricted manner will be overtly and specifically defined as such in this Detailed Description section. Throughout the specification and claims, the following terms take at least the meanings explicitly associated herein, unless the context dictates otherwise. The meanings identified below do not necessarily limit the terms, but merely provide illustrative examples for the terms. For example, each of the terms "based on" and "based upon" is not exclusive, and is equivalent to the term "based, at least in part, on," and includes the option of being based on additional factors, some of which may not be described herein. As another example, the term "via" is not exclusive, and is equivalent to the term "via, at least in part," and includes the option of being via additional factors, some of which may not be described herein. The phrase "in one example," as used herein does not necessarily refer to the same embodiment or example, although it may. Use of particular textual numeric designators does not imply the existence of lesser-valued numerical designators. References in the singular are made merely for clarity of reading and include plural references unless plural references are specifically excluded. The term "or" is an inclusive "or" operator unless specifically indicated otherwise. For example, the phrase "A or B" means "A, B, or A and B." As used herein, the terms "component" and "system" are intended to encompass hardware, software, or various combinations of hardware and software. Thus, for example, a system or component may be a process, a process executing on a computing device, the computing device, or a portion thereof. The meaning of "a," "an," and "the" includes plural reference, and the meaning of "in" includes "in" and "on." The term "connected" means a direct electrical connection between the items connected, without any intermediate devices. The term "coupled" means a direct electrical connection between the items connected, or an indirect connection through one or more passive or active intermediary devices and/or components. The term "signal" means at least a power, current, voltage, data, electric wave, magnetic wave, electromagnetic wave, or optical signal. Based upon context, the term "coupled" may refer to a wave or field coupling effect, which may relate to a corresponding optical field, magnetic field, electrical field, or a combined electromagnetic field.

It will be understood that the configurations and/or approaches described herein are examples, and that these specific embodiments or examples are not to be considered in a limiting sense, because numerous variations are possible. As such, various systems, circuits, and/or devices may be broken into additional functions or circuits, and/or combined with other functions or circuits as may be desirable in a specific implementation. Similarly, the specific routines, procedures or methods described herein may represent one or more of any number of processing strategies. As such, various acts illustrated and/or described may be performed in the sequence illustrated and/or described, in other sequences, in parallel, or omitted. Likewise, the order of the above-described processes or methods may be changed. The subject matter thus includes all novel and non-obvious combinations and sub-combinations of the methods, processes, circuits, devices, systems and configurations, and other features, functions and/or properties disclosed herein, as well as any and all equivalents thereof.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for managing electrical power in a processor device (102) including a control processor (108) and a plurality of processor cores (112A/B), each processor core having a corresponding core power controller (114A/B), the method including:
identifying a power budget for the processor device;
receiving, by firmware (109) running on the control processor (108) from software (116A/B) running on one or more of the plurality of processor cores(110A/B), a priority for each of a plurality of virtual machines, VMs, (118A/B) running on the processor cores (116A/B) and an assignment for each of the plurality of VMs to one or more processor cores (112A/B) of the plurality of processor cores;
determining a power allocation among the plurality of processor cores based the VM priorities and the VM assignments, wherein the power allocation provides more power consumption for processor cores with an assigned VM having higher priority and less power consumption for processor cores with an assigned VM having lower priority;
determining resource control data for a first processor core of the plurality of processor cores based on the power allocation;
controlling, by the firmware (109), a power consumption of the first processor core based the resource control data.

2. The method of claim 1, wherein the method further includes:
determining a processor device power budget based on a server power budget and at least one power alarm;
determining a core power budget for the first processor core based on the processor device power budget and the priorities of the assigned VMs;
determining the resource control data based on the core power budget.

3. The method of claim 1 or claim 2, wherein the method further includes:
in response to a power alarm being set, reducing core power budgets for a first set of processor cores assigned to VMs with a lower priority and not reducing core power budgets for a second set of processor cores assigned to VMs with a higher priority.

4. The method of any preceding claim, wherein the method further includes:
estimating a power consumption based on a measurement of electrical current within the processor device;
analyzing a difference between estimated power consumption and the power budget with an electrical power feedback loop controller in the control processor;
adjusting the resource control data based on an output of the PID controller.

5. The method of any preceding claim, wherein the controlling of the power consumption of the first processor core including sending the resource control data to the core power controller corresponding to the first processor core.

6. The method of any preceding claim, wherein the resource control data indicates a voltage level to be supplied to the first processor core and a clock speed to be supplied to the first processor core.

7. The method of any preceding claim, wherein the method further includes:
receiving boost priorities for the plurality of VMs and throttle priorities for the plurality of VMs, wherein the boost priorities and throttle priorities are different;
in response to a determination that a budget for a resource is above a nominal amount of the resource, adjusting the resource control data based on the boost priorities; and
in response to a determination that the budget for a resource is below the nominal amount of the resource, adjusting the resource control data based on the throttle priorities.

8. A processor device (102), comprising:
a control processor (108); and
a plurality of processor cores (112A/B), each processor core having a corresponding core power controller (114A/B);
wherein the control processor (108) is configured to:
identify a power budget for the processor device;
receive, by firmware (109) running on the control processor from software running on one or more of the plurality of processor cores, a priority for each of a plurality of virtual machines, VMs, (118A/B) running on the processor cores (112A/B) and an assignment for each of the plurality of VMs to one or more processor cores of the plurality of processor cores;
determine a power allocation among the plurality of processor cores based the VM priorities and the VM assignments, wherein the power allocation provides higher computing performance for processor cores with an assigned VM having higher priority and lower computing performance for processor cores with an assigned VM having lower priority;
determine resource control data for a first processor core of the plurality of processor cores based on the power allocation;
control, by the firmware (109), a power consumption of the first processor core based the resource control data.

9. The processor device of claim 8, wherein the control processor is further configured to:
determine a processor device power budget based on a server power budget and at least one power alarm;
determine a core power budget for the first processor core based on the processor device power budget and the priorities of the assigned VMs;
determine the resource control data based on the core power budget.

10. The processor device of claim 8 or claim 9, wherein the control processor is further configured to:
in response to a power alarm being set, reduce core power budgets for a first set of processor cores assigned to VMs with a lower priority and not reducing core power budgets for a second set of processor cores assigned to VMs with a higher priority.

11. The processor device of any of claims 8 to 10, wherein the control processor is further configured to:
estimate a power consumption based on a measurement of electrical current within the processor device;
analyze a difference between estimated power consumption and the power budget with an electrical power feedback loop controller in the control processor;
adjust the resource control data based on an output of the PID controller.

12. The processor device of any of claims 8 to 11, wherein the controlling of the power consumption of the first processor core including sending the resource control data to the core power controller corresponding to the first processor core.

13. The processor device of any of claims 8 to 12, wherein the resource control data indicates a voltage level to be supplied to the first processor core and a clock speed to be supplied to the first processor core.

14. The processor device of any of claims 8 to 13, wherein the control processor is further configured to:
receive boost priorities for the plurality of VMs and throttle priorities for the plurality of VMs, wherein the boost priorities and throttle priorities are different;
in response to a determination that a budget for a resource is above a nominal amount of the resource, adjust the resource control data based on the boost priorities; and
in response to a determination that the budget for a resource is below the nominal amount of the resource, adjust the resource control data based on the throttle priorities.

15. A non-transitory computer-readable storage medium storing instructions that, when executed on one or more control processors of a processor device comprising a plurality of processor cores, each processor core including a core power controller, cause the processor device to:
identify a power budget for the processor device;
receive, by firmware (109) running on the control processor from software running on one or more of the plurality of processor cores, a priority for each of a plurality of virtual machines, VMs, (118A/B) running on the processor cores (112A/B) and an assignment for each of the plurality of VMs to one or more processor cores of the plurality of processor cores;
determine a power allocation among the plurality of processor cores based the VM priorities and the VM assignments, wherein the power allocation provides higher computing performance for processor cores with an assigned VM having higher priority and lower computing performance for processor cores with an assigned VM having lower priority;
determine resource control data for a first processor core of the plurality of processor cores based on the power allocation;
control, by the firmware (109), a power consumption of the first processor core based the resource control data.
